# EUROPÄISCHE PATENTANMELDUNG

(11) **EP 3 258 231 A1**
(43) Veröffentlichungstag der Anmeldung: **20.12.2017**
(21) Anmeldenummer: 17173046.8
(22) Anmeldetag: 26.05.2017
(51) Int. Cl.: G01K 5/68, H01H 71/16

(54) **ELEKTROMECHANISCHES SCHUTZSCHALTGERÄT MIT EINER ÜBERLASTAUSLÖSEEINRICHTUNG**

(30) Priorität: 14.06.2016 DE 102016210485
(71) Anmelder: Siemens Aktiengesellschaft, 80333 München (DE)
(72) Erfinder: Neumeier, Michael, 93055 Regensburg (DE); Vierling, Winfried, 93073 Neutraubling (DE)

(57) **Zusammenfassung**

Das erfindungsgemäße elektromechanische Schutzschaltgerät (1) weist einen zwischen einer Eingangsklemme (7) und einer Ausgangsklemme (8) verlaufenden Strompfad, der seinerseits wenigstens einen von einem festen und einem beweglichen Kontaktelement gebildeten Schaltkontakt (5) aufweist, sowie eine Schaltmechanik (4) zum Öffnen und Schließen des Schaltkontakts (5) auf. Weiterhin weist das elektromechanische Schutzschaltgerät (1) eine thermomechanischen Überlastauslöseeinrichtung auf, welche ihrerseits ein Thermobimetallelement (11) aufweist, das direkt oder indirekt von einem durch den Strompfad fließenden elektrischen Strom erwärmbar ist und sich bei einem über dem Nennstrom liegenden Strom verbiegt. Das Thermobimetallelement (11) ist dabei aus zumindest einem ersten Streifen (12) und einem zweiten Streifen (13), welche fest miteinander verbunden sind, gebildet und weist eine Koppelstelle (15) zur mechanischen Ankopplung an die Schaltmechanik (4) auf. Dabei sind die beiden Streifen (12, 13) derart überlappend zueinander angeordnet, dass entlang einer Längserstreckungsrichtung des Thermobimetallelements (11) ein Ende des ersten Streifens (12) das Ende des zweiten Streifens (13) überragt, wobei die Koppelstelle (15) am Ende des ersten - über das Ende des zweiten Streifens (13) hinausragenden - Streifens (12) ausgebildet ist. Auf diese Weise können die Herstellkosten des Thermobimetallelements (11), und damit der thermischen Überlastauslöseeinrichtung sowie des elektromechanischen Schutzschaltgerätes (1), spürbar reduziert werden.

## Beschreibung

Die Erfindung betrifft ein elektromechanisches Schutzschaltgerät, beispielsweise ein Leitungsschutzschalter, Leistungsschalter oder Fehlerstromschutzschalter, das einen zwischen einer Eingangsklemme und einer Ausgangsklemme verlaufenden Strompfad mit wenigstens einem von einem festen und einem beweglichen Kontaktelement gebildeten Schaltkontakt sowie eine Schaltmechanik zum Öffnen und Schließen des Schaltkontakts aufweist. Weiterhin weist das Schutzschaltgerät eine Überlastauslöseeinrichtung auf, welche ihrerseits ein Thermobimetallelement aufweist, das direkt oder indirekt von einem durch den Strompfad fließenden elektrischen Strom erwärmbar ist und sich bei einem über dem Nennstrom liegenden Strom verbiegt, wobei das Thermobimetallelement aus zumindest einem ersten Streifen und einem zweiten Streifen gebildet ist, welche fest miteinander verbunden sind und eine Koppelstelle zur mechanischen Ankopplung an die Schaltmechanik aufweist.

Die Erfindung betrifft weiterhin eine thermomechanische Überlastauslöseeinrichtung für ein elektromechanisches Schutzschaltgerät, beispielsweise ein Leitungsschutzschalter, Leistungsschalter oder Fehlerstromschutzschalter, gemäß dem Oberbegriff des Anspruchs 10.

Elektromechanische Schutzschaltgeräte - beispielsweise Leistungsschalter, Leitungsschutzschalter oder Fehlerstromschutzschalter - werden insbesondere als Schalt- und Sicherheitselemente in elektrischen Energieversorgungsnetzen eingesetzt. Leistungsschalter sind speziell für hohe Ströme ausgelegt. Ein Leitungsschutzschalter (sogenannter LS-Schalter), welcher im englischsprachigen Raum auch als "Miniature Circuit Breaker" (MCB) bezeichnet wird, ist eine Überstromschutzeinrichtung in der Elektroinstallation und wird insbesondere im Bereich der Niederspannungsnetze eingesetzt. Leistungsschalter und Leitungsschutzschalter garantieren ein sicheres Abschalten bei Kurzschluss und schützen Verbraucher und Anlagen vor Überlast, beispielsweise vor Beschädigung elektrischer Leitungen durch zu starke Erwärmung in Folge eines zu hohen elektrischen Stromes. Leistungsschalter und Leitungsschutzschalter werden insbesondere als Schalt- und Sicherheitselemente in elektrischen Energieversorgungsnetzen eingesetzt und dienen der Überwachung sowie der Absicherung eines elektrischen Stromkreises.

Ein Fehlerstromschutzschalter ist eine Schutzeinrichtung zur Gewährleistung eines Schutzes gegen einen gefährlichen Fehlerstrom in einer elektrischen Anlage. Ein derartiger Fehlerstrom, welcher auch als Differenzstrom bezeichnet wird, tritt auf, wenn ein spannungsführendes Leitungsteil einen elektrischen Kontakt gegen Erde aufweist. Dies ist beispielsweise dann der Fall, wenn eine Person ein spannungsführendes Teil einer elektrischen Anlage berührt: in diesem Fall fließt der Strom als Fehlerstrom durch den Körper der betreffenden Person gegen die Erdung ab. Zum Schutz gegen derartige Körperströme muss der Fehlerstromschutzschalter bei Auftreten eines derartigen Fehlerstroms die elektrische Anlage schnell und sicher allpolig vom Leitungsnetz trennen. Im Allgemeinen Sprachgebrauch werden anstelle des Begriffs "Fehlerstromschutzschalter" auch die Begriffe FI-Schutzschalter (kurz: FI-Schalter), Differenzstromschutzschalter (kurz: DI-Schalter) oder RCD (für "Residual Current Protective Device") gleichwertig verwendet.

Zur Überwachung und Absicherung des elektrischen Stromkreises wird das Schutzschaltgerät über zwei Anschlussklemmen mit einer elektrischen Leitung des zu überwachenden Stromkreises elektrisch leitend verbunden, um bei Bedarf den elektrischen Strom in der jeweiligen Leitung zu unterbrechen. Das Schutzschaltgerät weist dabei einen Schaltkontakt mit einem ortsfesten Festkontakt sowie einem relativ dazu beweglichen Bewegkontakt auf. Der Bewegkontakt ist dabei über eine Schaltmechanik des Schutzschaltgerätes betätigbar, so dass der Schaltkontakt geöffnet und geschlossen werden kann. Auf diese Weise wird bei Auftreten eines vordefinierten Zustandes, beispielsweise eines Kurzschlusses oder einer elektrischen Überlast, der Schaltkontakt geöffnet, um den überwachten Stromkreis vom elektrischen Leitungsnetz zu trennen. Derartige Schutzschaltgeräte sind auf dem Gebiet der Niederspannungstechnik auch als Reiheneinbaugeräte bekannt.

Aus der Patentschrift DE 10 2004 040 288 B4 ist ein Schutzschalter bekannt, welcher eine erste Auslöseeinrichtung zur Erfassung und Abschaltung eines Kurzschlusses sowie eine zweite Auslöseeinrichtung zur Erfassung und Abschaltung eines Überlastzustandes aufweist. Weiterhin weist der Schutzschalter einen Schaltkontakt mit einem Festkontakt und einem relativ dazu beweglichen Bewegkontakt auf. Die Schaltmechanik des Schutzschalters weist ferner einen Auslösehebel auf, der sowohl mit der ersten Auslöseeinrichtung als auch mit der zweiten Auslöseeinrichtung derart gekoppelt ist, dass bei Auslösen der ersten Auslöseeinrichtung und/oder der zweiten Auslöseeinrichtung der Auslösehebel betätigt und damit der Schaltkontakt geöffnet wird. Beim Öffnen des Schaltkontakts entsteht zwischen dem Festkontakt und dem sich wegbewegenden Bewegkontakt zunächst ein Lichtbogen, welcher im weiteren Verlauf gelöscht wird, um den Stromfluss endgültig zu unterbrechen.

Um den Stromfluss bei Auftreten eines Kurzschlusses schnell zu unterbrechen, ist die erste Auslöseeinrichtung üblicher Weise als magnetisches Auslösesystem ausgebildet, welches eine Magnetspule sowie eine relativ dazu bewegliche Anker-Stößel-Baugruppe aufweist. Wird die Magnetspule mit dem hohen Kurzschlussstrom bestromt, so wird die Anker-Stößel-Baugruppe aufgrund der hieraus resultierenden hohen elektromagnetischen Kräfte in die Magnetspule gezogen. Diese hochdynamische Bewegung der Anker-Stößel-Baugruppe wird dazu genutzt, den Schaltkontakt zu öffnen und damit den Stromfluss über den Schaltkontakt zu unterbrechen.

Die zweite Auslöseeinrichtung ist in der Regel als thermisches Auslösesystem ausgebildet, um den Stromfluss bei Auftreten eines Überlastzustandes zu unterbrechen. Das thermische Auslösesystem weist in der Regel ein Auslöseelement aus einem Bimetall oder einer Formgedächtnislegierung auf, welches sich bei Temperaturänderung verformt. Diese Formänderung wird mittels eines mechanischen Übertragungsglieds auf die Schaltmechanik - beispielsweise auf den Auslösehebel - übertragen, wodurch die Auslösung der Schaltmechanik initiiert wird. Infolge dessen wird der Schaltkontakt geöffnet und damit der Stromfluss unterbrochen.

Insbesondere bei preiswerten Reiheneinbaugeräten stellt das teure Material eines Thermobimetalls oder einer Formgedächtnislegierung einen erheblichen Kostenfaktor dar. Aus diesem Grund ist in der DE 10 2012 013 433 B4 ein sogenannter thermomechanischer Wandler für ein Schutzschaltgerät offenbart, bei dem der bisher verwendete Streifen aus Thermobimetall oder Formgedächtnismaterial ersetzt wird durch eine Kombination aus einem ersten Streifen, der aus Thermobimetall oder Formgedächtnismaterial besteht, sowie einem als "Ausleger" bezeichneten zweiten Streifen, welcher nicht aus Thermobimetall oder Formgedächtnismaterial besteht, und damit deutlich günstiger ist.

Es ist deshalb die Aufgabe der vorliegenden Erfindung, eine kostengünstige Alternative für eine thermische Überlastauslöseeinrichtung sowie ein elektromechanisches Schutzschaltgerät mit einer derartigen thermischen Überlastauslöseeinrichtung anzugeben.

Diese Aufgabe wird durch das elektromechanische Schutzschaltgerät sowie die thermischen Überlastauslöseeinrichtung gemäß den unabhängigen Ansprüchen gelöst. Vorteilhafte Ausgestaltungen sind Gegenstand der abhängigen Ansprüche.

Das erfindungsgemäße elektromechanische Schutzschaltgerät, welches beispielsweise als Leitungsschutzschalter oder als Fehlerstromschutzschalter ausgebildet ist, weist einen zwischen einer Eingangsklemme und einer Ausgangsklemme verlaufenden Strompfad, der seinerseits wenigstens einen von einem festen und einem beweglichen Kontaktelement gebildeten Schaltkontakt aufweist, sowie eine Schaltmechanik zum Öffnen und Schließen des Schaltkontakts auf. Weiterhin weist das elektromechanische Schutzschaltgerät eine thermomechanischen Überlastauslöseeinrichtung auf, welche ihrerseits ein Thermobimetallelement aufweist, das direkt oder indirekt von einem durch den Strompfad fließenden elektrischen Strom erwärmbar ist und sich bei einem über dem Nennstrom liegenden Strom verbiegt. Das Thermobimetallelement ist dabei aus zumindest einem ersten Streifen und einem zweiten Streifen, welche fest miteinander verbunden sind, gebildet und weist eine Koppelstelle zur mechanischen Ankopplung an die Schaltmechanik auf. Dabei sind die beiden Streifen derart überlappend zueinander angeordnet, dass entlang einer Längserstreckungsrichtung des Thermobimetallelements ein Ende des ersten Streifens das Ende des zweiten Streifens überragt, wobei die Koppelstelle am Ende des ersten - über das Ende des zweiten Streifens hinausragenden - Streifens ausgebildet ist.

Der erste und der zweite Streifen, welche das Thermobimetallelement bilden, weisen ein unterschiedliches Wärmeausdehnungsverhalten aus, so dass sich hieraus ein bimetallischer Effekt, d.h. eine temperaturbedingte Formänderung erzielen lässt. Die beiden Streifen überlappen einander und sind dabei in der Regel unterschiedlich lang, wobei die für die beiden Streifen verwendeten Materialien so gewählt sind, dass der längere erste Streifen aus dem kostengünstigeren der beiden das Thermobimetallelement bildendenden Materialien gebildet ist. Hieraus ergibt sich der Vorteil, dass der teurere erste der beiden das Thermobimetallelement bildenden Streifen deutlich kürzer ist als der günstigere zweite Streifen. Die Herstellkosten des Thermobimetallelements, und damit der thermischen Überlastauslöseeinrichtung sowie des elektromechanischen Schutzschaltgerätes, können dadurch spürbar reduziert werden.

In einer vorteilhaften Weiterbildung des Schutzschaltgerätes erstreckt sich das Thermobimetallelement in seiner Längserstreckungsrichtung von einem ersten distalen Ende zu einem zweiten distalen Ende, wobei am ersten distalen Ende eine Einspannstelle zur ortsfesten Fixierung des Thermobimetallelements in einem Gehäuse des Schutzschaltgerätes angeordnet ist, und wobei die Koppelstelle am zweiten distalen Ende angeordnet ist.

In einer weiteren vorteilhaften Weiterbildung des Schutzschaltgerätes erstreckt sich der erste Streifen vom ersten distalen Ende bis zum zweiten distalen Ende des Thermobimetallelements.

In einer weiteren vorteilhaften Weiterbildung des Schutzschaltgerätes ist der zweite Streifen zwischen dem ersten distalen Ende und dem zweiten distalen Ende angeordnet.

In einer weiteren vorteilhaften Weiterbildung des Schutzschaltgerätes ist der zweite Streifen mittig zum ersten Streifen angeordnet.

Da die Koppelstelle zur mechanischen Ankopplung des Thermobimetallelements an die Schaltmechanik erfindungsgemäß am Ende des ersten Streifens, welcher über das Ende des zweiten Streifens hinausragt, ausgebildet, d.h. angeordnet ist, stellt dieses Ende des ersten Streifens das zweite distale Ende des Thermobimetallelements dar. Das erste distale Ende des Thermobimetallelements wird hingegen durch die Einspannstelle zur ortsfesten Fixierung des Thermobimetallelements im Gehäuse des Schutzschaltgerätes gebildet. Damit erstreckt sich der erste Streifen vom ersten distalen Ende zum zweiten distalen Ende des Thermobimetallelements. Hieraus ergibt sich der Vorteil, dass im Gegensatz zu der in der Druckschrift DE 10 2012 013 433 B4 offenbarten Lösung die Einspannstelle mit der Koppelstelle einstückig, d.h. durch den durchgängig von der Einspannstelle bis zur Koppelstelle verlaufenden ersten Streifen, verbunden ist. Der in der Druckschrift DE 10 2012 013 433 B4 zusätzlich erforderliche Montageschritt einer Befestigung eines nicht-bimetallischen Elements an einem bimetallischen Element ist somit nicht mehr erforderlich, wodurch die Montagekosten und damit die Herstellkosten deutlich reduziert werden können.

Durch die Anordnung des zweiten Streifens relativ zum ersten Streifen - beispielsweise mittig, außermittig oder bündig zum distalen ersten Ende des Thermobimetallelements - ist das temperaturbedingte, geometrische Krümmungsverhalten des Thermobimetallelements spezifisch variierbar und damit an verschiedene Einsatzbedingungen anpassbar. Unter dem Begriff "mittig" ist dabei im Wesentlichen mittig zu verstehen, so dass der erste Streifen auch im Bereich des ersten distalen Endes, welches die Einspannstelle des Thermobimetallelements bildet, über den zweiten Streifen hinausragt.

In einer weiteren vorteilhaften Weiterbildung des Schutzschaltgerätes ist der erste Streifen durch die aktive Komponente des Thermobimetallelements gebildet.

In einer weiteren vorteilhaften Weiterbildung des Schutzschaltgerätes ist der erste Streifen durch die die passive Komponente des Thermobimetallelements gebildet.

Der Grundtyp eines Thermobimetallelements ist in der Regel aus zwei Metallstreifen unterschiedlichen Materials gebildet, welche bei einer vordefinierten Temperatur die gleiche Länge aufweisen und fest miteinander verbunden sind. Die verwendeten Materialien unterscheiden sich jedoch deutlich hinsichtlich ihres Temperaturausdehnungsverhaltens, so dass eine Temperaturänderung zu einer unterschiedlichen Längenänderung führt. Der Streifen mit der größeren thermischen Ausdehnung wird dabei als Aktivkomponente, der Streifen mit der geringeren thermischen Ausdehnung als Passivkomponente des Thermobimetallelements bezeichnet. Da die beiden Streifen fest miteinander verbunden sind, können sie sich bei Erwärmung nicht mehr unabhängig voneinander ausdehnen: die Aktivkomponente wird durch die Passivkomponente an der Ausdehnung behindert, wodurch das Thermobimetallelement in Richtung der Passivkomponente gekrümmt wird.

Für die Aktivkomponente können beispielsweise Manganlegierungen mit hohem Kupfer- und Nickelanteil (z.B. MnCu18Ni10 oder MnNi16Cu10), korrosionsbeständiger Stahl mit hohem Nickelanteil (z.B. FeNi20Mn6, FeNi14Mn7 oder FeNi22Cr3) oder Nickel-werkstoffe eingesetzt werden. All diesen Legierungen weisen eine hohe thermische Ausdehnung auf. Für die Passivkomponente kommen beispielsweise Eisen-Nickel-Werkstoffe (z.B. FeNi36, FeNi38, FeNi39, FeNi42, FeNi46 oder FeNi32Co6), korrosionsbeständige Stähle mit Chrom- oder Nickel-Chrom-Kobalt-Bestandteilen oder Kupfer-Nickel-Legierungen wie CuNi44Mn1 zum Einsatz, die allesamt ein vergleichsweise niedriges thermisches Ausdehnungsverhalten aufweisen.

Die Frage, ob der erste Streifen durch die aktive Komponente oder die passive Komponente des Thermobimetallelements gebildet ist, wird neben den rein technischen Materialeigenschaften letztendlich auch dahingehend zu beurteilen sein, für welche der beiden Komponenten das teurere Material verwendet werden wird. Auf diese Weise können die Materialkosten, und damit die Herstellkosten des Thermobimetallelements, deutlich reduziert werden.

In einer weiteren vorteilhaften Weiterbildung des Schutzschaltgerätes weist das Thermobimetallelement zumindest einen weiteren Streifen auf, welcher zumindest mit dem ersten Streifen zumindest abschnittsweise fest verbunden ist.

Bei dem weiteren Streifen kann es sich beispielsweise um eine Zwischenschicht zwischen der aktiven Komponente und der passiven Komponente des Thermobimetallelements handeln. Solche Zwischenschichten, auch als Zwischenlagen bezeichnet, werden verwendet, um beispielsweise die technischen Eigenschaften des Thermobimetallelements, z.B. dessen Festigkeit, gezielt zu beeinflussen, oder auch um eine stabile mechanische Verbindung zwischen der der aktiven Komponente und der passiven Komponente des Thermobimetallelements zu erreichen.

Es ist jedoch auch möglich, dass der weitere Streifen als Trägerschicht mit einem Bereich des ersten Streifens, welcher das Ende des zweiten Streifens überragt, verbunden wird, um dort dem ersten Streifen eine ausreichende Stabilität zu verleihen. Dies ist insbesondere dann vorteilhaft, wenn der weitere Streifen aus einem deutlich günstigeren Material als der erste Streifen gebildet ist.

In einer weiteren vorteilhaften Weiterbildung des Schutzschaltgerätes sind die Streifen durch Schweißen und/oder Walzen miteinander verbunden.

Da die einzelnen Komponenten eines Thermobimetalls aufgrund ihrer geringen Dicke in der Regel nicht in der gewünschten Fertigungsdicke miteinander verbunden werden können, werden zunächst dickere Schichten miteinander verbunden und anschließend auf ihre Fertigungsdicke gewalzt. Zur Herstellung des zu walzenden Schichtverbundwerkstoffs für ein Thermobimetall können verschiedene Verfahren eingesetzt werden, beispielsweise das Angießen einer flüssigen Komponente an eine feste Komponente, das Warmpressschweißen oder das Warmwalzplattieren. Die jeweilige Verfahrensart hängt dabei unter anderem von den gewählten, miteinander zu verbindenden Werkstoffen ab. Ferner kann der zweite Streifen sowohl auf den ersten Streifen aufgewalzt, als auch in den ersten Streifen eingewalzt werden.

Die erfindungsgemäße thermomechanische Überlastauslöseeinrichtung für ein elektromechanisches Schutzschaltgerät, beispielsweise für einen Leitungsschutzschalter oder einen Fehlerstromschutzschalter, mit einem Thermobimetallelement, welches direkt oder indirekt von einem durch den Strompfad fließenden elektrischen Strom erwärmbar ist und sich bei einem über dem Nennstrom liegenden Strom verbiegt, ist dadurch gekennzeichnet, dass die thermomechanische Überlastauslöseeinrichtung wie vorstehend beschrieben aufgebaut ist.

Hinsichtlich der Vorteile der thermomechanische Überlastauslöseeinrichtung wird auf die vorstehend beschriebenen Vorteile des elektromechanischen Schutzschaltgerätes verwiesen.

Im Folgenden werden Ausführungsbeispiele des elektromechanischen Schutzschaltgerätes sowie der Überlastauslöseeinrichtung unter Bezug auf die beigefügten Figuren näher erläutert. In den Figuren sind:
- Figur 1: eine schematische Darstellung eines aus dem Stand der Technik bekannten elektromechanischen Schutzschaltgerätes;
- Figuren 2 bis 7: schematische Darstellungen unterschiedlicher Ausführungsformen der erfindungsgemäßen Überlastauslöseeinrichtung in einem Ruhezustand;
- Figuren 8 und 9: schematische Darstellungen der Überlastauslöseeinrichtung in einem ausgelenkten Zustand;
- Figuren 10 bis 12: schematische Darstellungen des erfindungsgemäßen elektromechanischen Schutzschaltgerätes in verschiedenen Betriebszuständen;

In den verschiedenen Figuren der Zeichnung sind gleiche Teile stets mit dem gleichen Bezugszeichen versehen. Die Beschreibung gilt für alle Zeichnungsfiguren, in denen das entsprechende Teil ebenfalls zu erkennen ist.

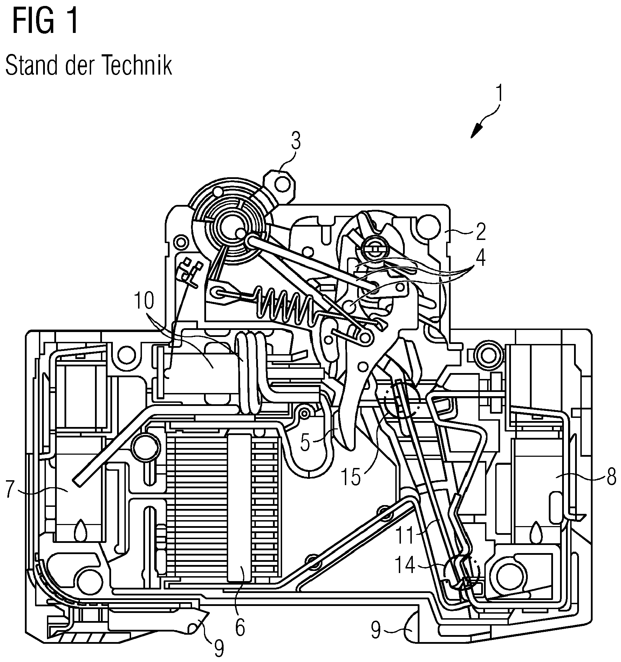

In Figur 1 ist ein aus dem Stand der Technik bekanntes elektromechanisches Schutzschaltgerät 1 mit einer herkömmlichen thermomechanischen Überlastauslöseeinrichtung schematisch dargestellt. Das Schutzschaltgerät 1 weist ein Gehäuse 2 auf, wobei die vordere Gehäuseschale in der Zeichnung weggelassen wurde, um einen detaillierten Einblick in den Aufbau des Schutzschaltgerätes 1 zu ermöglichen. Im linken und rechten Randbereich des Gehäuses 2 sind elektrische Anschlussklemmen - die Eingangsklemme 7 sowie die Ausgangsklemme 8 - angeordnet, über die das Schutzschaltgerät 1 mit externen elektrischen Anschlussleitungen (nicht dargestellt) kontaktiert werden kann. Im oberen Bereich, der im eingebauten Zustand des Schutzschaltgerätes 1 der Vorderseite entspricht, ist ein Betätigungselement 3 zur manuellen Betätigung - d.h. zum Einschalten und Ausschalten - des Schutzschaltgerätes 1 angeordnet. Das Betätigungselement 3 ist mit einer Schaltmechanik 4 des Schutzschaltgerätes 1 mechanisch gekoppelt. Unterhalb der Schaltmechanik 4 ist ein Schaltkontakt 5 angeordnet, welcher mit Hilfe der Schaltmechanik 4 betätigt, d.h. geöffnet und geschlossen werden kann. In der Darstellung der Figur 1 ist der Schaltkontakt 5 geschlossen, das Betätigungselement 3 des Schutzschaltgerätes 1 befindet sich dementsprechend in seiner ON-Position. Ferner weist das Schutzschaltgerät 1 Befestigungsmittel 9 auf, welche an einer der Vorderseite gegenüberliegenden Rückseite am Gehäuse 2 angeordnet sind. Mit Hilfe dieser Befestigungsmittel 9 ist das Schutzschaltgerät auf einem Tragelement, beispielsweise einer Hutschiene (nicht dargestellt), befestigbar.

Im Falle eines Kurzschlusses weist das Schutzschaltgerät 1 eine sog. Kurzschluss-Auslösevorrichtung 10 auf. Durch den hohen Kurzschlussstrom wird ein mechanisches Auslösesignal erzeugt und auf die Schaltmechanik 4 übertragen, wodurch die Schaltmechanik 4 ausgelöst wird. Infolge dieser Auslösung wird schließlich der Schaltkontakt 5 geöffnet. Entsprechend nimmt das Betätigungselement 3 seine OFF-Position ein. Unterhalb der Kurzschluss-Auslösevorrichtung 20 ist eine Lichtbogen-Löschvorrichtung 6 angeordnet. Beim Öffnen des stromdurchflossenen Schaltkontakts 5 entsteht zunächst ein Lichtbogen, der zur Löschung in Richtung der Lichtbogen-Löschvorrichtung 6 getrieben wird, wo er schließlich gelöscht wird.

Für den Fall einer elektrischen Überlast weist das Schutzschaltgerät 1 eine thermische Überlastauslöseeinrichtung auf, welche bei dem in Figur 1 dargestellten Schutzschaltgerät 1 zwischen der Lichtbogen-Löscheinrichtung 6 und der Ausgangsklemme 8 angeordnet ist. Die thermische Überlast-Auslösevorrichtung weist ein Thermobimetallelement 11 auf, welches aus zwei fest miteinander verbundenen Metallstreifen gebildet ist und sich in seiner Längserstreckungsrichtung von einem ersten distalen Ende zu einem zweiten distalen Ende hin erstreckt. An seinem ersten distalen Ende weist das Thermobimetallelement 11 eine Einspannstelle 14 auf, über die es im Gehäuse 2 des Schutzschaltgerätes 1 ortsfest befestigbar ist. Das zweite distale Ende des Thermobimetallelements 11 ist als freies Ende ausgebildet, welches bei Erwärmung aufgrund der Wärmedehnung des Thermobimetallelements 11 relativ zur Befestigungsstelle bewegbar ist. An seinem zweiten distalen Ende weist das Thermobimetallelement 11 eine Koppelstelle 15 zur mechanischen Ankopplung an die Schaltmechanik 4 auf. Diese mechanische Ankopplung ist beispielsweise auch mittels eines Bügels realisierbar.

Wird ein für eine Überlastauslösung maßgeblicher, vordefinierter Stromschwellwert überschritten, so verbiegt sich das Thermobimetallelement 11. Da das erste distale Ende ortsfest mit dem Gehäuse 2 verbunden ist, führt dieses Verbiegen des Thermobimetallelement 11 zu einer Relativbewegung des zweiten distalen Endes - und damit eines Koppelelements der Schaltmechanik 4, welches über die Koppelstelle 15 mit dem Thermobimetallelement 11 mechanisch gekoppelt ist. Auf diese Weise wirkt das Thermobimetallelement 11 bei Überschreiten des vordefinierten Stromschwellwertes auf die Schaltmechanik 4 des Schutzschaltgerätes 1 ein, um diese auszulösen und den Schaltkontakt 5 zu öffnen und damit den Stromfluss über den Schaltkontakt 5 zu unterbrechen.

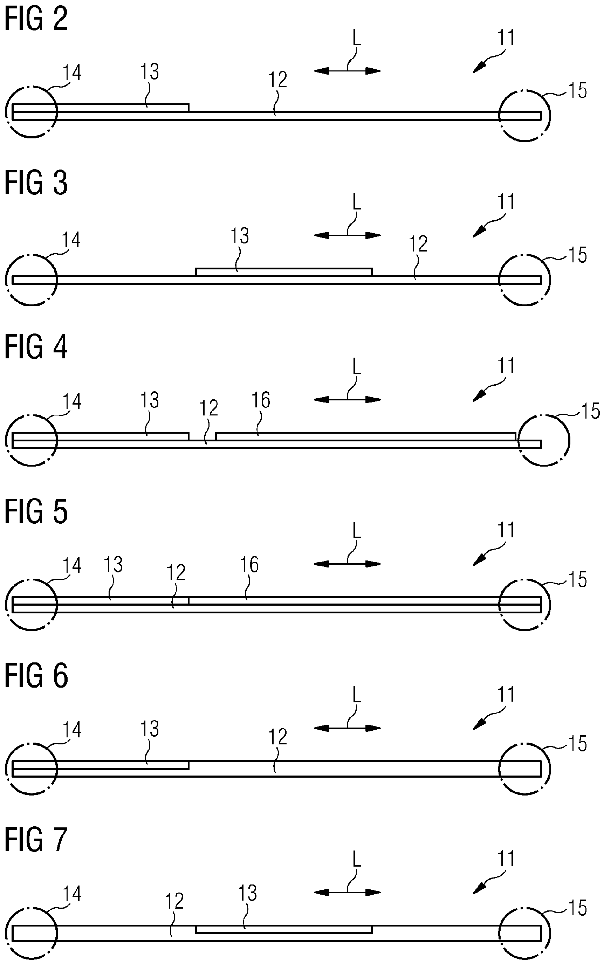

In den Figuren 2 bis 7 sind unterschiedliche Ausführungsformen der erfindungsgemäßen thermomechanischen Überlastauslöseeinrichtung schematisch dargestellt. Die Überlastauslöseeinrichtung weist ein Thermobimetallelement 11 auf, welches aus zumindest einem metallischen ersten Streifen 12 und einem metallischen zweiten Streifen 13 gebildet ist uns sich entlang einer Längserstreckungsrichtung L von seinem ersten distalen Ende (jeweils links dargestellt) zu seinem zweiten distalen Ende (jeweils rechts dargestellt) hin erstreckt. Der erste Streifen 12 und der zweite Streifen 13 stellen die aktive Komponente bzw. die passive Komponente des Thermobimetallelements 11 dar, wobei beide Zuordnungen (der erste Streifen 12 bildet die aktive oder die passive Komponente) prinzipiell möglich sind.

Allen in den Figuren 2 bis 7 dargestellten Ausführungsformen des Thermobimetallelements 11 ist gemein, dass sie am linken Ende, welches das erste distale Ende darstellt, eine Einspannstelle 14 zur ortsfesten Befestigung im Gehäuse 2 des Schutzschaltgerätes 1 aufweisen. Am rechten Ende, welches dem zweiten distalen Ende entspricht, weisen die Ausführungsformen des Thermobimetallelements 11 jeweils eine Koppelstelle 15 zur mechanischen Ankopplung an die Schaltmechanik 4 des Schutzschaltgerätes 1 auf.

Die in den Figuren 4 und 5 dargestellten Ausführungsformen des Thermobimetallelements 11 weisen einen weiteren Streifen 16 auf, welcher in der Längserstreckungsrichtung L in dem Bereich, in dem kein zweiter Streifen 13 vorliegt, fest mit dem ersten Streifen 12 verbunden ist. Der weitere Streifen 16 kann beispielsweise dazu dienen, die mechanische Festigkeit des Thermobimetallelements 11 in diesem Bereich zu gewährleisten. Während in den Figuren 2 bis 5 der zweite Streifen 13 (und ggf. der weitere Streifen16) auf den ersten Streifen 12 aufgewalzt ist, ist bei den in den Figuren 6 und 7 dargestellten Ausführungsformen des Thermobimetallelements 11 der zweite Streifen 13 in den ersten Streifen 12 eingewalzt, wodurch die mechanische Festigkeit des Thermobimetallelements 11 auch in dem Bereich, in dem kein zweiter Streifen 13 existiert, gewährleistet ist.

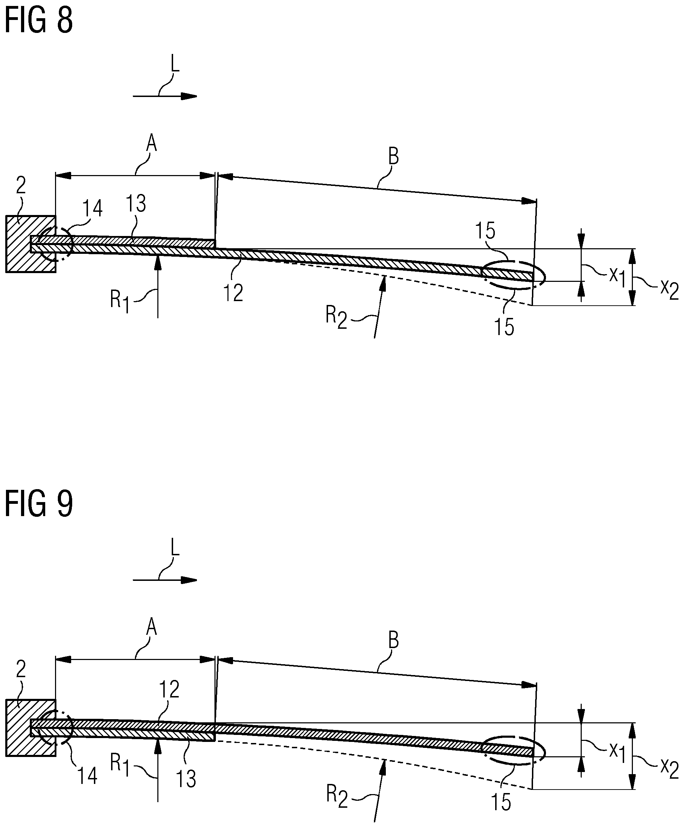

Die Figuren 8 und 9 zeigen schematische Darstellungen der erfindungsgemäßen Überlastauslöseeinrichtung in einem ausgelenkten Zustand. Das linke Ende, welches dem ersten distalen Ende des Thermobimetallelements 11 entspricht, ist wiederum als Einspannstelle 14 zur ortsfesten Befestigung im Gehäuse 2 des Schutzschaltgerätes 1 ausgebildet. Das rechte Ende des Thermobimetallelements 11 stellt entsprechend das zweite distale Ende dar, an dem die Koppelstelle 15 zur Kopplung des Thermobimetallelements 11 an die Schaltmechanik 4 des Schutzschaltgerätes 1 angeordnet ist.

Das Thermobimetallelement 11 ist in der Längserstreckungsrichtung L in zwei Abschnitte A und B unterteilt, wobei Abschnitt A nur die Hälfte der Länge von Abschnitt B aufweist. Abschnitt A ist dadurch definiert, dass hier sowohl der erste Streifen 12 als auch der zweite Streifen 13 vorliegen. Die beiden Streifen 12 und 13 sind fest miteinander verbunden, so dass sich bei einer Temperaturerhöhung der bimetallische Effekt einstellt - das Thermobimetallelement 11 krümmt sich temperaturbedingt in Richtung der Passivkomponente. Die Krümmung des Thermobimetallelements 11 in Abschnitt A ist dabei durch den Krümmungsradius R₁ angegeben. In Abschnitt B hingegen besteht das Thermobimetallelement 11 nur aus dem ersten Streifen 12, welcher über das Ende des zweiten Streifens 13 hinausragt. In diesem Abschnitt B tritt infolge des Fehlens des zweiten Streifens 13 dementsprechend kein bimetallischer Effekt auf. Die Auslenkung des gesamten Thermobimetallelements 11 ist durch die Auslenkung x₁ (Abweichung vom Ruhezustand) angegeben.

Die gestrichelte Linie, welche mit dem Radius R₂ beschriftet ist, markiert die Krümmung eines Thermobimetallelements 11, bei dem sowohl der erste Streifen 12 als auch der zweite Streifen 13 von der Einspannstelle 14 bis zur Koppelstelle 15 geführt ist, so dass sich die gesamte Länge des Thermobimetallelements 11 (Abschnitt A plus Abschnitt B) ein bimetallischer Effekt auftritt. Die hierzu gehörige Auslenkung x₂ ist betragsmäßig etwas kleiner als der doppelte Wert der Auslenkung x₁. Anhand dieser Darstellungen lässt sich die Effizienz des Materialeinsatzes verdeutlichen: Obwohl durch das Zusammenwirken des ersten Streifens 12 (passive Komponente) mit dem zweiten Streifen 13 (aktive Komponente) lediglich in Abschnitt A - und damit lediglich über ein Drittel der Gesamtlänge A+B des Thermobimetalls 11 - ein bimetallischer Effekt erzielt wird, reicht die daraus resultierende Krümmung (mit Radius R₁) dazu aus, eine Auslenkung x₁ von mehr als 50% der Auslenkung x₂ zu erzielen.

Die in den Figuren 8 und 9 dargestellten Thermobimetallelemente 11 unterscheiden sich dahingehend, dass in Figur 8 die Passivkomponente (mit der geringeren thermischen Ausdehnung) durch den ersten Streifen 12 gebildet ist, wohingegen in Figur 9 die Passivkomponente durch den zweiten Streifen 13 gebildet ist. Da das Krümmungsverhalten des Thermobimetallelements 11 jedoch nur von dem Zusammenwirken von Aktivkomponente und Passivkomponente abhängt, und dieses Zusammenwirken in beiden Fällen nur in Abschnitt A existiert, ist die Auslenkung x₁ in beiden Fällen nahezu identisch. Es ist demnach unerheblich, welches der für die Aktiv- und die Passivkomponente verwendeten Materialien das teurere Material ist: in beiden Fällen führt ein Materialeinsatz von lediglich einem Drittel der teureren Komponente zu einer Auslenkung x₁ von gut 50% - jeweils bezogen auf ein Thermobimetall, bei dem beide Komponenten über die gesamte Länge A+B verwendet werden.

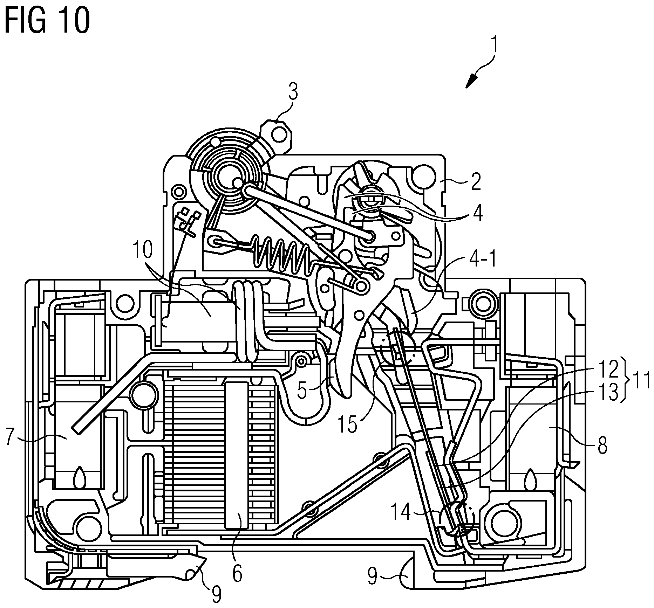

In den Figuren 10 bis 12 ist das erfindungsgemäße elektromechanische Schutzschaltgerät 1 in verschiedenen Betriebszuständen schematisch dargestellt. Die einzelnen Darstellungen entsprechen im Wesentlichen der Darstellung in Figur 1, lediglich das in Figur 1 verwendete, herkömmliche Thermobimetallelement 11 ist durch das aus den Figuren 2 bis 9 bekannte, erfindungsgemäße Thermobimetallelement 11 ersetzt worden. Die Einspannstelle 14 befindet sich jeweils an dem unten dargestellten, ersten distalen Ende des Thermobimetallelements 11. Entsprechend befindet sich die Koppelstelle 15 am oberen, zweiten distalen Ende des Thermobimetallelements 11. Der erste Streifen 12 ist von der Einspannstelle 14 bis zur Koppelstelle 15 durchgängig verlaufend ausgebildet und bildet die Passivkomponente, in deren Richtung das Thermobimetallelement 11 bei Erhöhung der Temperatur gekrümmt wird. Der zweite Streifen 13 ist im unteren Abschnitt A (siehe Fig.8), welcher sich an die Einspannstelle 14 anschließt, fest mit dem ersten Streifen 12 verbunden, so dass bei einer Temperaturerhöhung in diesem Abschnitt A ein bimetallischer Krümmungseffekt realisierbar ist. Das in den Figuren 10 bis 12 dargestellte Thermobimetallelement 11 entspricht damit dem in den Fig.2 bzw. Fig.8 dargestellten Thermobimetallelement 11.

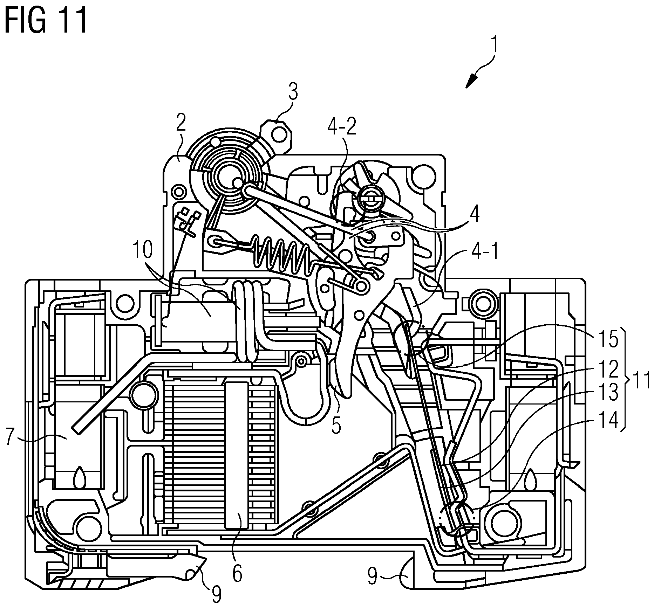

Figur 10 zeigt die thermomechanische Überlastauslöseeinrichtung in einem ersten, "kalten" Betriebszustand: das Thermobimetallelement 11 befindet sich dabei in seinem Ruhezustand und weist keinerlei temperaturbedingte Verformung auf. In Figur 11 ist die thermomechanische Überlastauslöseeinrichtung in einem zweiten, "erwärmten" Betriebszustand unmittelbar vor der Auslösung der Schaltmechanik 4 dargestellt: das Thermobimetallelement 11 hat sich aufgrund der Temperaturerhöhung bereits etwas verformt, d.h. nach rechts gekrümmt: das zweite distale Ende des Thermobimetallelements 11 berührt in der Darstellung der Figur 11 ein erstes Ende eines Auslösehebels 4-1 der Schaltmechanik 4, ohne diese bereits auszulösen. An einem anderen Ende des Auslösehebels 4-1 befindet sich eine Verklinkungsstelle 4-2, welche in der Darstellung der Figur 11 noch verklinkt ist.

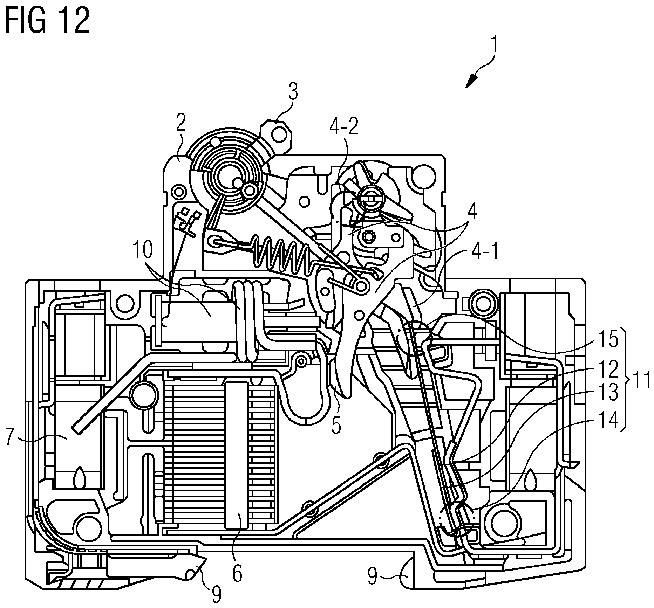

Die Auslösung der Schaltmechanik 4 ist schließlich in Figur 12 dargestellt: diese zeigt die thermomechanische Überlastauslöseeinrichtung in einem dritten, "heißen" Betriebszustand unmittelbar vor der Auslösung der Schaltmechanik 4. Das Thermobimetallelement 11 ist aufgrund der fortschreitenden Temperaturerhöhung noch etwas weiter nach rechts gekrümmt, wodurch das zweite distale Ende des Thermobimetallelements 11 eine Kraft auf den Auslösehebel 4-1 ausübt, welche bewirkt, dass dieser im Gegenuhrzeigersinn verdreht ist. Diese Bewegung des Auslösehebels 4-1 führt zu einer Entklinkung einer Verklinkungsstelle 4-2 der Schaltmechanik 4. Infolgedessen kann sich die Schaltmechanik 4 nicht mehr abstützen und fällt - durch Federkräfte angetrieben - in sich zusammen, wodurch der Schaltkontakt 5 geöffnet und das Betätigungselement 3 in seine AUS-Stellung verbracht wird (nicht dargestellt).

Die technische Gestaltung der erfindungsgemäßen Überlastauslöseeinrichtung ist nicht auf die dargestellten, bevorzugten Ausführungsformen beschränkt. Es sind auch beliebige Kombinationen bevorzugter Ausführungsformen sowie einzelner Ausgestaltungsmerkmale möglich, sofern sie sich nicht gegenseitig ausschließen.

### Bezugszeichenliste

- 1: Schutzschaltgerät
- 2: Gehäuse
- 3: Betätigungselement
- 4: Schaltmechanik
4-1 Auslösehebel
4-2 Verklinkungsstelle
- 5: Schaltkontakt
- 6: Lichtbogen-Löschvorrichtung
- 7: Eingangsklemme
- 8: Ausgangsklemme
- 9: Befestigungsmittel
- 10: Kurzschluss-Auslösevorrichtung
- 11: Thermobimetallelement
- 12: erster Streifen
- 13: zweiter Streifen
- 14: Einspannstelle
- 15: Koppelstelle
- 16: weiterer Streifen

- A: Abschnitt A
- B: Abschnitt B
- R₁: Radius R₁
- R₂: Radius R₂
- x₁: Auslenkung x₁
- x₂: Auslenkung x₂
- L: Längserstreckungsrichtung

## Patentansprüche

1. Elektromechanisches Schutzschaltgerät (1), beispielsweise ein Leitungsschutzschalter, Leistungsschalter oder Fehlerstromschutzschalter,
- mit einem zwischen einer Eingangsklemme (7) und einer Ausgangsklemme (8) verlaufenden Strompfad, der wenigstens einen von einem festen und einem beweglichen Kontaktelement gebildeten Schaltkontakt (5) aufweist,
- mit einer Schaltmechanik (4) zum Öffnen und Schließen des Schaltkontakts (5),
- mit einer thermomechanischen Überlastauslöseeinrichtung, welche ein Thermobimetallelement (11) aufweist, das direkt oder indirekt von einem durch den Strompfad fließenden elektrischen Strom erwärmbar ist und sich bei einem über dem Nennstrom liegenden Strom verbiegt,
- wobei das Thermobimetallelement (11) aus zumindest einem ersten Streifen (12) und einem zweiten Streifen (13) gebildet ist, welche fest miteinander verbunden sind,
- wobei das Thermobimetallelement (11) eine Koppelstelle (15) zur mechanischen Ankopplung an die Schaltmechanik (4) aufweist,
**dadurch gekennzeichnet,**
- **dass** die beiden Streifen (12, 13) zueinander überlappend angeordnet sind, derart, dass entlang einer Längserstreckungsrichtung (L) des Thermobimetallelements (11) ein Ende des ersten Streifens (11) das Ende des zweiten Streifens (12) überragt,
- **dass** die Koppelstelle (15) am Ende des ersten, über das Ende des zweiten Streifens (13) hinausragenden Streifens (12) ausgebildet ist.

2. Schutzschaltgerät (1) nach Anspruch 1,
**dadurch gekennzeichnet,**
- **dass** das Thermobimetallelement (11) sich in der Längserstreckungsrichtung von einem ersten distalen Ende zu einem zweiten distalen Ende hin erstreckt,
- wobei am ersten distalen Ende eine Einspannstelle (14) zur ortsfesten Fixierung des Thermobimetallelements (11) in einem Gehäuse (2) des Schutzschaltgerätes (1) angeordnet ist, und wobei die Koppelstelle (15) am zweiten distalen Ende angeordnet ist.

3. Schutzschaltgerät (1) nach Anspruch 2,
**dadurch gekennzeichnet,**
**dass** der erste Streifen (12) sich vom ersten distalen Ende bis zum zweiten distalen Ende erstreckt.

4. Schutzschaltgerät (1) nach einem der Ansprüche 2 oder 3, **dadurch gekennzeichnet,**
**dass** der zweite Streifen (13) zwischen dem ersten distalen Ende und dem zweiten distalen Ende angeordnet ist.

5. Schutzschaltgerät (1) nach einem der vorstehenden Ansprüche,
**dadurch gekennzeichnet,**
**dass** der zweite Streifen (13) mittig zum ersten Streifen (12) angeordnet ist.

6. Schutzschaltgerät (1) nach einem der vorstehenden Ansprüche,
**dadurch gekennzeichnet,**
**dass** der erste Streifen (12) durch die aktive Komponente des Thermobimetallelements (11) gebildet ist.

7. Schutzschaltgerät (1) nach einem der vorstehenden Ansprüche,
**dadurch gekennzeichnet,**
**dass** der erste Streifen (12) durch die passive Komponente des Thermobimetallelements gebildet ist.

8. Schutzschaltgerät (1) nach einem der vorstehenden Ansprüche,
**dadurch gekennzeichnet,**
**dass** das Thermobimetallelement (11) zumindest einen weiteren Streifen (16) aufweist, welcher zumindest mit dem ersten Streifen (12) zumindest abschnittsweise fest verbunden ist.

9. Schutzschaltgerät (1) nach einem der vorstehenden Ansprüche,
**dadurch gekennzeichnet,**
**dass** die Streifen (12, 13, 16) durch Schweißen und/oder Walzen miteinander verbunden sind.

10. Thermomechanische Überlastauslöseeinrichtung für ein elektromechanisches Schutzschaltgerät (1), beispielsweise für einen Leitungsschutzschalter, einen Leistungsschalter oder einen Fehlerstromschutzschalter,
- mit einem Thermobimetallelement (11), welches direkt oder indirekt von einem durch den Strompfad fließenden elektrischen Strom erwärmbar ist und sich bei einem über dem Nennstrom liegenden Strom verbiegt,
**dadurch gekennzeichnet, dass** die Überlastauslöseeinrichtung wie in einem der Ansprüche 1 bis 9 beschrieben aufgebaut ist.
